# EUROPÄISCHE PATENTSCHRIFT

(11) **EP 3 286 030 B1**
(45) Veröffentlichungstag und Bekanntmachung des Hinweises auf die Patenterteilung: **01.05.2019**
(21) Anmeldenummer: 16720766.1
(22) Anmeldetag: 22.04.2016
(51) Int. Cl.: B60K 1/00, B60K 8/00, B60K 1/04

(54) **ENERGIEVERSORGUNGSEINHEIT, KOMBINATION EINER DERARTIGEN ENERGIEVERSORGUNGSEINHEIT MIT EINER WEITEREN FUNKTIONSEINHEIT UND SCHWERLASTFAHRZEUG**
POWER SUPPLY UNIT, COMBINATION OF SUCH AN ENERGY SUPPLY UNIT WITH A FURTHER FUNCTION UNIT AND HEAVY GOODS VEHICLE
UNITÉ D'ALIMENTATION EN ÉNERGIE, COMBINAISON D'UNE TELLE UNITÉ D'ALIMENTATION EN ÉNERGIE AVEC UNE AUTRE UNITÉ FONCTIONNELLE ET POIDS LOURD

(30) Priorität: 23.04.2015 DE 102015207427
(43) Veröffentlichungstag der Anmeldung: 28.02.2018
(73) Patentinhaber: Goldhofer AG, 87700 Memmingen (DE)
(72) Erfinder: HÄFELE, Horst, 87727 Babenhausen (DE); PFARR, Gabor, 89077 Ulm (DE)
(74) Vertreter: Weickmann & Weickmann PartmbB
(86) Internationale Anmeldenummer: PCT/EP2016/059033
(87) Internationale Veröffentlichungsnummer: WO 2016/170125

(56) Entgegenhaltungen:
- EP-A1- 0 947 376
- WO-A1-2011/108948
- WO-A1-2015/010285
- DE-U1-202013 004 211
- US-A- 3 913 697

## Beschreibung

Die Erfindung betrifft eine Energieversorgungseinheit gemäß dem Oberbegriff des Anspruchs 1.

Konventionell wird eine Hydraulikpumpe, welche Hydraulikfluid zu dem wenigstens einen hydraulischen Antriebsmotor eines Schwerlastfahrzeugs fördert, mittels eines Dieselmotors angetrieben. Wie für einen Verbrennungsmotor üblich, werden dabei jedoch Abgase erzeugt. Dies ist insbesondere beim Betrieb des Schwerlastfahrzeugs in geschlossenen Räumen unerwünscht und kann gegebenenfalls sogar gesundheitsschädlich für sich in dem Raum befindliche Personen sein.

Rein elektrisch betriebene Schwerlastfahrzeuge sind ebenfalls bekannt, weisen jedoch im Vergleich zu mit einem Dieselmotor betriebenen Schwerlastfahrzeugen einige Nachteile auf, welche ihre Einsatzmöglichkeiten stark begrenzen. Zu nennen sind hier beispielsweise kurze Betriebsdauern zwischen zwei Ladevorgängen, lange Ladezeiten und dergleichen mehr.

Aus der DE 20 2013 004 211 U1 ist eine Energieversorgungseinheit eines Schwerlastfahrzeugs bekannt, welche einen Elektromotor umfasst, welcher dazu eingerichtet ist, eine Hydraulikpumpe anzutreiben, um Hydraulikfluid zu einem Antriebs-Hydraulikleistungssystem des Schwerlastfahrzeugs zu fördern.

Ferner sei auf die Dokumente WO 2015/010285 A1, US 3,913,697 A, WO 2011/108948 A1 und EP 0 947 376 A1 hingewiesen.

Es ist daher Aufgabe der vorliegenden Erfindung, eine Energieversorgungseinheit für ein Schwerlastfahrzeug bereitzustellen, welche über verbesserte Einsatzmöglichkeiten verfügt.

Gemäß eines ersten Aspekts wird diese Aufgabe erfindungsgemäß gelöst durch eine Energieversorgungseinheit nach Anspruch 1.

Die erfindungsgemäße Energieversorgungseinheit bietet somit den Vorteil, dass der Batteriepack, unter Verwendung der Hydraulikpumpe als Hydraulikmotor und des Elektromotors als Elektrogenerator, geladen werden kann, während das Schwerlastfahrzeugs mittels einer anderen Energiequelle, z.B. einem Dieselmotor, angetrieben wird. Hierdurch kann die Einsatzdauer des Schwerlastfahrzeugs deutlich erhöht werden.

Auf den weiteren Vorteil, nämlich den durch die erfindungsgemäße Energieversorgungseinheit ermöglichten modularen Aufbau der Antriebsanordnung für ein Schwerlastfahrzeug, wird nachstehend bei Gelegenheit der Diskussion der Kombination der erfindungsgemäßen Energieversorgungseinheit mit der weiteren Funktionseinheit noch detaillierter eingegangen werden.

Vorteilhafterweise kann die Hydraulikpumpe einen Hydraulikanschluss aufweisen, über welchen sie mit einem an der weiteren Funktionseinheit angeordneten Hydraulikfluid-Reservoir in Fluidverbindung bringbar ist. Über diese Fluidverbindung können in dem Antriebs-Hydraulikleitungssystem durch etwaige Leckagen verlorengegangene Mengen an Hydraulikfluid aus dem an der weiteren Funktionseinheit angeordneten Hydraulikfluid-Reservoir nachgeführt werden. Daher braucht die Energieversorgungseinheit selbst kein Hydraulikfluid-Reservoir aufzuweisen, vielmehr kann hierzu das an der weiteren Funktionseinheit ohnehin vorhandene Hydraulikfluid-Reservoir genutzt werden. Dies vereinfacht den Aufbau der erfindungsgemäßen Energieversorgungseinheit und reduziert somit deren Gestehungskosten.

Vorteilhafterweise kann die erfindungsgemäße Energieversorgungseinheit ferner einen Tank für Kühlflüssigkeit zum Kühlen des Elektromotors und/oder einen Kühler zum Kühlen der Kühlflüssigkeit zum Kühlen des Elektromotors umfassen. Die Kühlflüssigkeit kann beispielsweise Öl sein, welches in einem geschlossenen Kühlkreislauf dem Elektromotor in Form einer Ölkühlung zu-und abgeführt werden kann. Mittels des Kühlers kann die von der Kühlflüssigkeit aufgenommene Wärme an die Umgebung abgegeben werden.

Die Energieversorgungseinheit kann ferner einen Tank für Kühlflüssigkeit zum Kühlen des Batteriepacks und/oder einen Kühler zum Kühlen der Kühlflüssigkeit zum Kühlen des Batteriepacks umfassen. Die Kühlflüssigkeit zum Kühlen des Batteriepacks kann beispielsweise Wasser sein, welches dem Batteriepack in Form einer Wasserkühlung zu- und abgeführt werden kann. Mittels des Kühlers kann die von der Kühlflüssigkeit aufgenommene Wärme an die Umgebung abgegeben werden.

Um bei rein elektrischem Betrieb möglichst viele der zum Betrieb des Schwerlastfahrzeugs erforderlichen Funktionen an der erfindungsgemäßen Energieversorgungseinheit bereitstellen zu können, kann diese in Weiterbildung der Erfindung ferner eine zweite, vorzugsweise ebenfalls von dem Elektromotor antreibbare, Hydraulikpumpe umfassen, welche dazu ausgelegt und bestimmt ist, Hydraulikfluid zu einem Lenkungssystem oder/und einem Hubsystem des Schwerlastfahrzeugs zu fördern. Das zu dem Lenkungssystem oder/und dem Hubsystem führende Hydraulikleitungssystem wird nachstehend auch als "Arbeits-Hydraulikleitungssystem" bezeichnet.

Die zweite Hydraulikpumpe kann einen Hydraulikanschluss aufweisen, über welchen sie mit einem an der weiteren Funktionseinheit angeordneten Hydraulikfluid-Reservoir in Fluidverbindung bringbar ist. Über diese Fluidverbindung können in dem Arbeits-Hydraulikleitungssystem durch etwaige Leckagen verlorengegangene Mengen an Hydraulikfluid aus dem an der weiteren Funktionseinheit angeordneten Hydraulikfluid-Reservoir ersetzt werden. Daher braucht die Energieversorgungseinheit selbst kein Hydraulikfluid-Reservoir aufzuweisen, vielmehr kann hierzu das an der weiteren Funktionseinheit ohnehin vorhandene Hydraulikfluid-Reservoir genutzt werden. Dies vereinfacht den Aufbau der erfindungsgemäßen Energieversorgungseinheit und reduziert somit deren Gestehungskosten.

In konstruktiv einfacher Weise können dabei die beiden Hydraulikpumpen mit ein und demselben an der weiteren Funktionseinheit angeordneten Hydraulikfluid-Reservoir verbindbar sein.

Vorteilhafterweise kann die Energieversorgungseinheit ferner einen Kompressor umfassen, welcher dazu ausgelegt und bestimmt ist, Druckluft für ein Bremssystem des Schwerlastfahrzeugs bereitzustellen. Das Bremssystem kann von dem Kompressor direkt oder von einem, vorzugsweise am Schwerlastfahrzeug angeordneten, Drucklufttank mit Druckluft versorgt werden. Sollte der Druck in dem Drucklufttank zu stark absinken, so kann er mittels des Kompressors wieder befüllt werden. Der Kompressor kann beispielsweise ebenfalls von dem Elektromotor angetrieben werden. Alternativ ist es jedoch auch denkbar, den Kompressor mittels eines weiteren Elektromotors oder eines Hydraulikmotors anzutreiben. Für die letztgenannte Variante spricht, dass der Kompressor nur im Bedarfsfall angetrieben werden muss.

Wie bereits angeklungen ist, betrifft die Erfindung nach einem zweiten Aspekt eine Kombination einer erfindungsgemäßen Energieversorgungseinheit mit einer zumindest ein Hydraulikfluid-Reservoir umfassenden, weiteren Funktionseinheit.

Die weitere Funktionseinheit kann beispielsweise ebenfalls eine Energieversorgungseinheit sein, beispielsweise eine Energieversorgungseinheit, wie sie von der Anmelderin für ihre selbstfahrenden modularen Schwerlastfahrzeuge unter der Bezeichnung "Power Pack" vertrieben wird. Die weitere Funktionseinheit kann somit beispielsweise einen Verbrennungsmotor, insbesondere einen Dieselmotor, und eine dritte Hydraulikpumpe umfassen, wobei der Verbrennungsmotor mit der dritten Hydraulikpumpe in diese antreibender Verbindung steht, und wobei die dritte Hydraulikpumpe dazu ausgelegt und bestimmt ist, Hydraulikfluid zu dem Antriebs-Hydraulikleitungssystem des Schwerlastfahrzeugs zu fördern, und zwar gegebenenfalls unter Durchströmen der als Hydraulikmotor arbeitenden einen Hydraulikpumpe. Grundsätzlich ist es auch denkbar, den Verbennungsmotor nur zum Laden des Batteriepacks zu betreiben, wobei in diesem Fall das Hydraulikfluid nur der als Hydraulikmotor arbeitenden einen Hydraulikpumpe, nicht aber dem Antriebs-Hydraulikleitungssystem des Schwerlastfahrzeugs zugeführt wird.

Die erfindungsgemäße Energieversorgungseinheit bietet somit den Vorteil, dass sie das modulare Konzept der selbstfahrenden Schwerlastfahrzeuge der Anmelderin ergänzt. Will ein Betreiber das Schwerlastfahrzeug nicht nur verbrennungsmotorisch betreiben, sondern auch elektromotorisch, so braucht er lediglich die erfindungsgemäße Energieversorgungseinheit zwischen das Schwerlastfahrzeug und das bereits vorhandene "Power Pack" zwischenzuschalten. Zur Ermöglichung eines Wechsels zwischen den beiden Betriebsweisen kann beispielsweise an einer Benutzerschnittstelle ein Auswahlschalter vorgesehen sein. Der Auswahlschalter kann dabei vorteilhafterweise an der erfindungsgemäßen Energieversorgungseinheit angeordnet sein, da es diese ist, die die zusätzliche, batteriebetriebene Betriebsweise ermöglicht.

Im verbrennungsmotorischen Betrieb kann die Hydraulikpumpe als Hydraulikmotor genutzt werden, der durch das von der dritten Hydraulikpumpe geförderte Hydraulikfluid angetrieben wird und den als Elektrogenerator arbeitenden Elektromotor antreibt, um einen Ladestrom für den Batteriepack der erfindungsgemäßen Energieversorgungseinheit bereitzustellen. Auf diese Weise braucht das Schwerlastfahrzeug nicht für gesonderte Ladezyklen stillgelegt zu werden. Hierdurch kann die nutzbare Einsatzdauer des Schwerlastfahrzeugs deutlich erhöht werden.

Ferner kann die erfindungsgemäße Energieversorgungseinheit ein steuerbares Ventil umfassen, welches dann, wenn der Batteriepack vollständig geladen ist, die eine Hydraulikpumpe abschaltet und das von der dritten Hydraulikpumpe geförderte Hydraulikfluid ausschließlich dem Antriebs-Hydraulikleitungssystem des Schwerlastfahrzeugs zuführt. Hierdurch kann unnötiger Energieaufwand vermieden werden, welcher durch den Antrieb der als Hydraulikmotor arbeitenden Hydraulikpumpe entsteht, ohne dass der Batteriepack weiter geladen werden könnte.

Alternativ oder zusätzlich zu dem Auswahlschalter zwischen batteriebetriebenem und kraftstoffbetriebenem Antriebsmodus kann die Steuervorrichtung vorteilhafterweise automatisch von dem batteriebetriebenen Antriebsmodus in den kraftstoffbetriebenen Antriebsmodus wechseln, falls zum Antrieb des Schwerlastfahrzeugs nicht mehr ausreichend Energie zur Verfügung stehen sollte. Natürlich ist auch denkbar, dass die Steuervorrichtung automatisch von dem kraftstoffbetriebenen Antriebsmodus in den batteriebetriebenen Antriebsmodus umschalten kann, falls nicht mehr ausreichend Kraftstoff zur Verfügung stehen sollte.

Analog zu der, vorzugsweise ebenfalls dem Elektromotor der Energieversorgungseinheit zugeordneten, zweiten Hydraulikpumpe, kann die weitere Funktionseinheit eine, vorzugsweise ebenfalls dem Verbrennungsmotor zugeordnete, vierte Hydraulikpumpe umfassen, welche dazu ausgelegt und bestimmt ist, Hydraulikfluid zu einem Lenkungssystem oder/und einem Hubsystem des Schwerlastfahrzeugs zu fördern. Ferner kann die weitere Funktionseinheit einen, vorzugsweise ebenfalls dem Verbrennungsmotor zugeordneten, zweiten Kompressor umfasst, welcher dazu ausgelegt und bestimmt ist, Druckluft für ein Bremssystem des Schwerlastfahrzeugs bereitzustellen.

In Weiterbildung der Erfindung kann die weitere Funktionseinheit eine Steuervorrichtung oder/und eine Benutzerschnittstelle umfassen. Dadurch kann das Schwerlastfahrzeug direkt an der weiteren Funktionseinheit, oder gegebenenfalls auch über eine entsprechende Fernsteuerung, bedient werden. Die Steuervorrichtung dient dabei der manuellen oder automatischen Regelung und Steuerung der Komponenten des Schwerlastfahrzeugs.

Für den Fall, dass das Schwerlastfahrzeug rein elektrisch betrieben werden soll, kann die weitere Funktionseinheit lediglich das Hydraulikfluid-Reservoir, und gewünschtenfalls die Steuervorrichtung oder/und die Benutzerschnittstelle umfassen. Da die weitere Funktionseinheit in diesem Fall keinen Verbrennungsmotor aufweist, können ihre Komponenten in einem entsprechend kompakt gehaltenen Rahmen angeordnet werden. Die Kombination aus Energieversorgungseinheit und weiterer Funktionseinheit kann in diesem Fall also eine kompaktere Bauform aufweisen als die Kombination aus Energieversorgungseinheit und weiterer Funktionseinheit mit Verbennungsmotor.

Dabei kann die Länge der Kombination aus der Energieversorgungseinheit und einer für den verbrennungsmotorischen Betrieb eingerichteten weiteren Funktionseinheit, zwischen etwa 4300 mm und etwa 5100 mm, beispielsweise etwa 4670 mm, betragen. Ferner kann die Länge der Kombination aus Energieversorgungseinheit und der für den rein elektrischen Betrieb eingerichteten weiteren Funktionseinheit zwischen etwa 3100 mm und etwa 3900 mm, beispielsweise etwa 3520 mm, betragen. Darüber hinaus kann die Länge der erfindungsgemäßen Energieversorgungseinheit alleine zwischen etwa 1600 mm und etwa 2000 mm, beispielsweise etwa 1800 mm, betragen.

Ferner kann die Länge der für den verbrennungsmotorischen Betrieb eingerichteten weiteren Funktionseinheit alleine zwischen etwa 2700 mm und etwa 3100 mm, beispielsweise etwa 2870 mm, betragen.

Vorteilhafterweise können, je nach Kombination aus Energieversorgungseinheit und weiterer Funktionseinheit, die Elektrik oder/und Software des Schwerlastfahrzeugs angepasst werden.

Gemäß einem dritten Aspekt der vorliegenden Erfindung betrifft diese ein Schwerlastfahrzeug mit einer erfindungsgemäßen Kombination einer erfindungsgemäßen Energieversorgungseinheit und einer weiteren Funktionseinheit.

In einer Weiterbildung der vorliegenden Erfindung kann der wenigstens eine hydraulische Antriebsmotor des Schwerlastfahrzeugs ein hydrostatischer Antriebsmotor sein. Somit kann der mittels der dem wenigstens einen hydraulischen Antriebsmotor zugeordneten Hydraulikpumpe erzeugte Hydraulikdruck zum Betrieb des Antriebsmotors verwendet werden.

Vorteilhafterweise kann wenigstens eine die ersten Verbindungselemente der Energieversorgungseinheit mit den ersten Gegenverbindungselementen des Schwerlastfahrzeugs verbindende oder/und die zweiten Verbindungselemente der Energieversorgungseinheit mit den zweiten Gegenverbindungselementen der weiteren Funktionseinheit verbindende Strebe längenveränderbar ausgebildet sein. Hierdurch kann die Anordnung der Energieversorgungseinheit oder/und der weiteren Funktionseinheit relativ zu dem Schwerlastfahrzeug verändert werden. Dies kann beispielsweise hydraulisch geschehen. So kann zum Beispiel beim Überfahren von Hindernissen die Energieversorgungseinheit oder/und die weitere Funktionseinheit relativ zu dem Schwerlastfahrzeug angehoben oder/und verkippt werden, um eine Kollision der Energieversorgungseinheit mit Hindernissen zu vermeiden.

Gerade im Hinblick auf die Nachrüstung von bestehenden Schwerlastfahrzeugen, welche bereits mit einer weiteren Funktionseinheit, die einen Verbrennungsmotor umfasst, ausgerüstet sind, kann es von Vorteil sein, wenn die ersten Verbindungselemente der Energieversorgungseinheit mit den zweiten Gegenverbindungselementen der weiteren Funktionseinheit und die zweiten Verbindungselemente der Energieversorgungseinheit mit den ersten Gegenverbindungselementen des Schwerlastfahrzeugs im Wesentlichen übereinstimmen. Hierdurch kann eine schnittstellenkompatible, nachrüstbare Energieversorgungseinheit bereitgestellt werden.

In einer Weiterbildung des Schwerlastfahrzeugs kann eine obere Begrenzungsfläche der Energieversorgungseinheit und gewünschtenfalls auch der weiteren Funktionseinheit höchstens auf gleicher Höhe angeordnet sein wie eine Lastaufnahmefläche des Schwerlastfahrzeugs. Auf diese Weise kann gewährleistet werden, dass das Schwerlastfahrzeug beispielsweise vollständig unter eine aufzunehmende Last gefahren werden kann. Aufgrund dieser Weiterbildung kann das Schwerlastfahrzeug auch mit der Energieversorgungseinheit und der weiteren Funktionseinheit voran unter eine aufzunehmende Last gefahren werden, sogar wenn der befahrbare Raum unter der Last nur geringfügig höher ist als die Lastaufnahmefläche des Schwerlastfahrzeugs.

Nachzutragen ist noch, dass das Batteriepacks eine Schnittstelle zu einem Stromnetz umfassen kann. Natürlich ist es ebenfalls denkbar, das Batteriepack auswechselbar oder direkt mit Netzstrom betreibbar auszubilden.

Nachfolgend wird die Erfindung anhand der beigefügten Zeichnungen an zwei Ausführungsformen im Detail beschrieben werden. Es stellt dar:
- Figur 1: eine perspektivische Ansicht einer an einem Schwerlastfahrzeug angebrachten Kombination einer Energieversorgungseinheit mit einer ersten Ausführungform einer weiteren Funktionseinheit, nämlich einer für den verbrennungsmotorischen Antrieb eingerichteten, weiteren Funktionseinheit;
- Figur 2: ein schematisches Schaltbild, welches beispielhaft Wechselwirkungen von Betriebskomponenten der Ausführungsform gemäß Figur 1 darstellt;
- Figur 3: eine perspektivische Ansicht einer an einem Schwerlastfahrzeug angebrachten Kombination der Energieversorgungseinheit mit einer zweiten Ausführungform der weiteren Funktionseinheit, nämlich einer für den rein elektromotorischen Antrieb eingerichteten, weiteren Funktionseinheit; und
- Figuren 4A bis 4C: Seitenansichten des Schwerlastfahrzeugs gemäß Figur 1 (Figur 4A), des Schwerlastfahrzeugs gemäß Figur 3 (Figur 4B) und eines Schwerlastfahrzeugs gemäß dem Stand der Technik (Figur 4C).

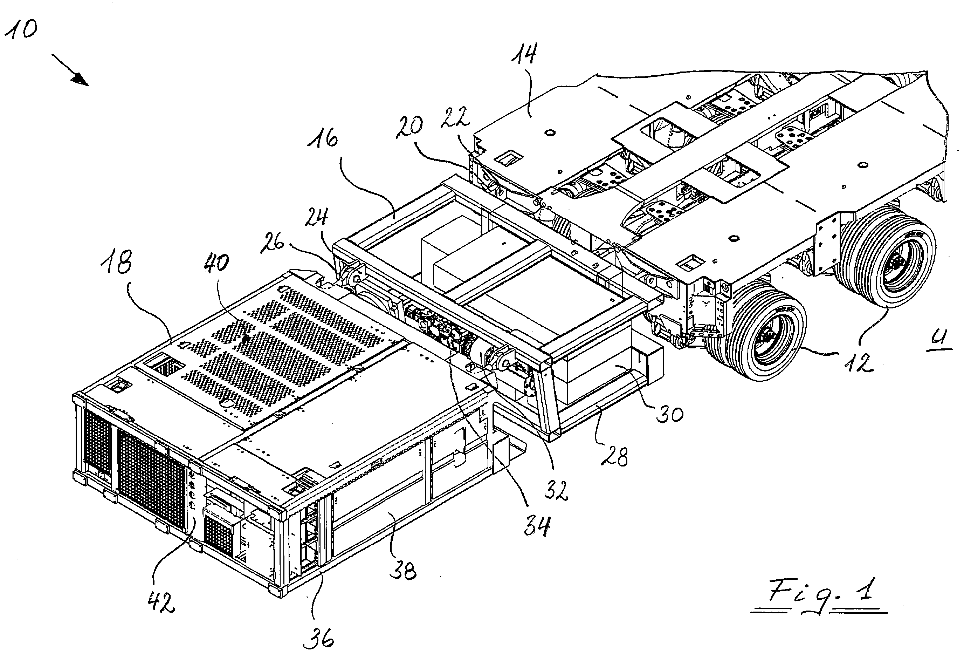

In Figur 1 ist ein Schwerlastfahrzeug ganz allgemein mit 10 bezeichnet. Es umfasst ein über Radbaugruppen 12 auf einem Untergrund U abgestütztes Fahrgestell 14, eine Energieversorgungseinheit 16 und eine weitere Funktionseinheit 18. In der Fachsprache wird auch das Fahrgestell 14 alleine als das "Schwerlastfahrzeug 10" bezeichnet, da ihm nur die die Antriebsenergie bereitstellenden Aggregate fehlen. Dieser Sprachgebrauch wird auch nachstehend verwendet werden.

Die Energieversorgungseinheit 16 weist auf ihrer dem Schwerlastfahrzeug 10 zugewandten Seite Verbindungselemente 20 auf, mit denen die Energieversorgungseinheit 16 mit ersten Gegenverbindungselementen 22 des Schwerlastfahrzeugs 10 (genauer: des Fahrgestells 14) verbunden ist. Auf ihrer dem Schwerlastfahrzeug 10 abgewandten Seite weist die Energieversorgungseinheit 16 zweite Verbindungselemente 24 auf, mit welchen die Energieversorgungseinheit 16 mit zweiten Gegenverbindungselementen 26 der weiteren Funktionseinheit 18 in Verbindung steht.

Die Energieversorgungseinheit 16 umfasst einen Rahmen 28, an dem ein Batteriepack 30, ein Elektromotor 32 und eine Hydraulikpumpe 34 angeordnet sind.

Die weitere Funktionseinheit 18 weist einen Rahmen 36 auf, an welchem ein Hydraulikfluid-Reservoir 38, ein Dieselmotor 40 und eine Benutzerschnittstelle 42 angeordnet sind.

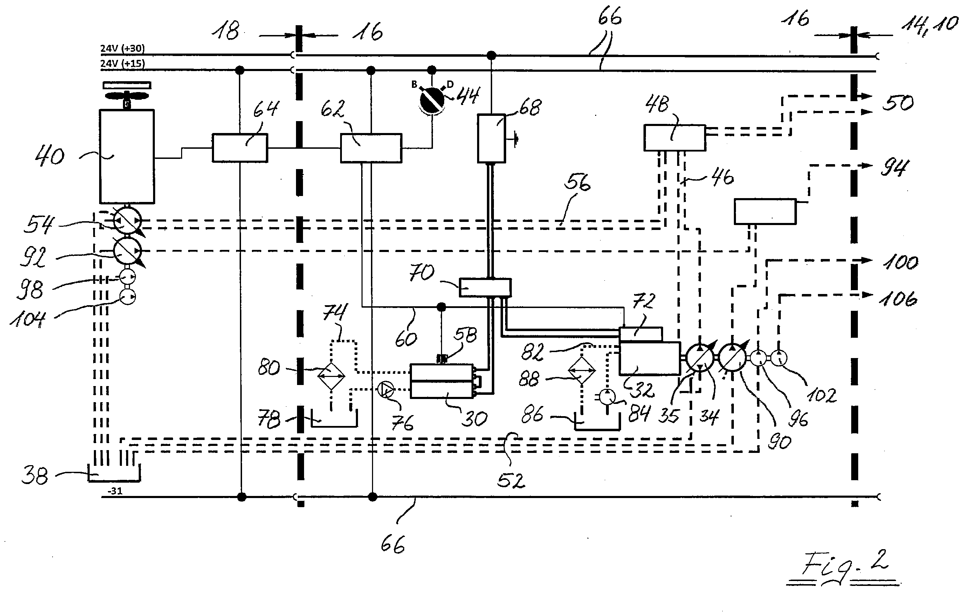

Die Energieversorgungseinheit 16 wird auch als "Hybrid Power Pack" bezeichnet, da sie in Kombination mit der auch als "Power Pack" bezeichneten, einen Dieselmotor umfassenden, weiteren Funktionseinheit 18 wahlweise einen verbrennungsmotorischen Betrieb (Dieselbetrieb D - siehe Figur 2) oder einen rein elektromotorischen Betrieb (Batteriebetrieb B - siehe Figur 2) des Schwerlastfahrzeugs 10 ermöglicht. Ein am Hybrid Power Pack 16 angeordneter Auswahlschalter 44 (siehe Figur 2) ermöglicht das Umschalten zwischen diesen beiden Betriebsarten.

Das Zusammenspiel der Komponenten des Hybrid Power Packs 16 mit jenen des herkömmlichen Power Packs 18 wird anhand des schematischen Schaltbilds der Figur 2 beschrieben.

In dem elektromotorischen Antriebsmodus B versorgt der Batteriepack 30 den Elektromotor 32 mit Energie, so dass der Elektromotor 32 die Hydraulikpumpe 34 antreiben kann. Die Hydraulikpumpe 34 fördert über ein Pumpen-Hydraulikleitungssystem 46, welches über ein Schaltventil 48 mit einem Antriebs-Hydraulikleitungssystem 50 des Schwerlastfahrzeugs 10 verbunden ist, Hydraulikfluid zu den in den Figuren nicht dargestellten Antriebsmotoren des Schwerlastfahrzeugs 10, die unmittelbar an den Rädern der Radbaugruppen 12 angeordnet sind. Für den Fall, dass beispielsweise aufgrund von Leckagen nicht ausreichend Hydraulikfluid in den Hydraulikleitungssystemen 46 und 50 vorliegen sollte, um einen korrekten Betrieb der Antriebsmotoren des Schwerlastfahrzeugs 10 zu gewährleisten, kann die fehlende Menge an Hydraulikfluid über eine Leitung 52 aus dem Hydraulikfluid-Reservoir 38 zu einem Anschluss 35 der Hydraulikpumpe 34 nachgeführt werden. Dies geschieht vorteilhafterweise automatisch.

In dem verbrennungsmotorischen Antriebsmodus D treibt der Dieselmotor 40 eine dritte Hydraulikpumpe 54 an, welche Hydraulikfluid über ein Hydraulikleitungssystem 56 zu dem Schaltventil 48 fördert. Ist der Batteriepack 30 nicht voll geladen, so leitet das Schaltventil 48 das Hydraulikfluid nicht nur in das Antriebs-Hydraulikleitungssystem 50 des Schwerlastfahrzeugs 10 ein, sondern auch in das Pumpen-Hydraulikleitungssystem 46, wo es die Hydraulikpumpe 34 als Hydraulikmotor antreibt. Ist der Batteriepack 30 hingegen voll geladen, so leitet das Schaltventil 48 das Hydraulikfluid ausschließlich in das Antriebs-Hydraulikleitungssystem 50 ein.

Der Ladungszustand des Batteriepacks 30 wird mittels eines Ladezustand-Sensors 58 erfasst und über eine Signalleitung 60 an eine Steuereinheit 62 der Energieversorgungseinheit 16 übermittelt, der auch die Stellung des Schalters 44 zugeführt wird. Über eine der übersichtlicheren Darstellung halber nicht gezeigt Signalleitung übermittelt die Steuereinheit 62 einen entsprechenden Stellbefehl an das Schaltventil 48.

Wird die Hydraulikpumpe 34 im verbrennungsmotorischen Antriebsmodus, wie vorstehend beschrieben, als Hydraulikmotor betrieben, so treibt sie den Elektromotor 32 als Elektrogenerator an, der somit einen Ladestrom erzeugt, mittels dessen der Batteriepack 30 wieder geladen werden kann.

An dieser Stelle sei darauf hingewiesen, dass die Steuereinheit 62 der Energieversorgungseinheit 16 mit einer zentralen Steuereinheit 64 der weiteren Funktionseinheit 18 verbunden ist. Wie bereits erläutert ist die zentrale Steuereinheit 64 mit einer in Figur 2 der übersichtlicheren Darstellung halber nicht dargestellten Bedienungseinheit 42 verbunden. Das einzige an der Energieversorgungseinheit 16 vorgesehene Bedienelement ist somit der Betreibsart-Wahlschalter 44.

Die beiden Steuereinheiten 62 und 64 werden über ein 24V-Bordnetz 66 mit Energie versorgt. Man erkennt, dass die Steuereinheiten 62 und 64 zum einen mit der Masseklemme "-31" und zum anderen mit der Pluspolklemme "+15" verbunden sind. Die Pluspolklemme "+15" ist jene Pluspolklemme, die im Gegensatz zur Pluspolklemme "+30" nur dann mit Strom versorgt wird, wenn ein (nicht dargestellter) Hauptschalter des Schwerlastfahrzeugs 10 eingeschaltet wird.

In diesem Zusammenhang sei darauf hingewiesen, dass bei Ausfall der Lichtmaschine der weiteren Funktionseinheit 18 das Bordnetz 66 auch vom Batteriepack 30 aus mit Strom versorgt werden kann. Da der Batteriepack 30 650V Spannung bereitstellt, ist ein DC/DC-Wandler 68 vorgesehen, der in diesem Fall über einen Leistungsschalter 70 mit Spannung versorgt wird. Im Normalfall verbindet der Leistungsschalter 70 den Batteriepack 30 mit dem Elektromotor 32, dem eine Leistungselektronik 72 vorgeordnet ist.

Um ein Überhitzen des Batteriepacks 30 verhindern zu können, ist dieser mit einem Kühlkreislauf 74 versehen, welcher als Kühlmittel beispielsweise Wasser umfasst. Zur Förderung des Wassers in dem Kühlkreislauf 74 ist eine Wasserpumpe 76 in dem Kühlkreislauf vorgesehen, welche Wasser aus einem Wassertank 78 zu dem Batteriepack 30 fördert, von wo aus es über einen Kühler 80 in den Wassertank 78 zurückkehrt. In dem Kühler 80 kann die von dem Batteriepack 30 abgegebene und in der Kühlflüssigkeit aufgenommene Wärme an die Umgebung abgegeben werden.

Analog zu dem dem Batteriepack 30 zugeordneten Kühlkreislauf 74 kann der Elektromotor 32 einen Kühlkreislauf 82 umfassen, welcher als Kühlflüssigkeit beispielsweise Öl umfasst. Der Kühlkreislauf 82 umfasst eine Ölpumpe 84, welche Öl aus einem Öltank 86 zu dem Elektromotor 32 fördert, um diesen zu kühlen. Vom Elektromotor 32 kehrt das Öl über einen Kühler 88 zu dem Öltank 86 zurück. In dem Kühler 88 kann die von dem Elektromotor 32 abgegebene und in der Kühlflüssigkeit aufgenommene Wärme an die Umgebung abgegeben werden.

Sowohl dem Elektromotor 32 als auch dem Dieselmotor 40 können weitere Hydraulikpumpen bzw. Kompressoren zugeordnet sein. Diese können vorteilhafterweise mit der Ausgangswelle des Elektromotors 32 bzw. des Dieselmotors 40 verbunden sein. Lediglich beispielhaft seien hier die Hydraulikpumpen 90 und 92 erwähnt, die Hydraulikfluid über ein Arbeits-Hydraulikleitungssystem 94 zu einem Hub- oder/und Lenkungssystem des Schwerlastfahrzeugs 10 fördern, Hydraulikpumpen 96 und 98, die Hydraulikfluid einem Hydraulikleitungssystem 100 zur Querstromspülung der Antriebsmotoren des Schwerlastfahrzeugs 10 zuführen, und Kompressoren 102 und 104, die über ein Druckluft-Leitungssystem 106 einem (nicht dargestellten) Drucklufttank des Bremssystems des Schwerlastfahrzeugs 10 Druckluft zuführen. Grundsätzlich ist es auch denkbar, die Kompressoren 102 und/oder 104 mittels eines gesonderten Elektro- oder Hydraulikmotors anzutreiben.

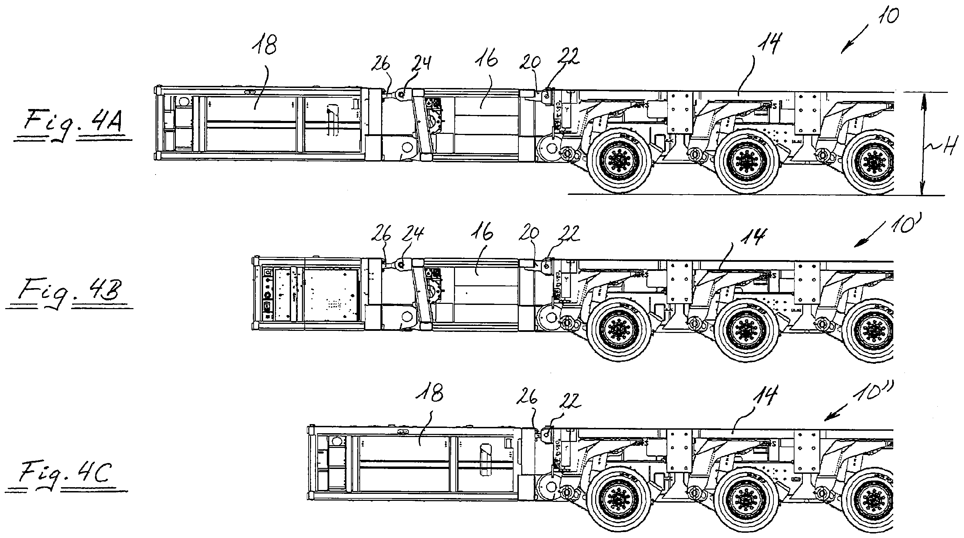

Mit Bezug auf Figur 4A sei darauf hingewiesen, dass das Schwerlastfahrzeug 10, die Energieversorgungseinheit 16 und die weitere Funktionseinheit 18 eine im Wesentlichen einheitliche Höhe H über der Fahrbahn aufweisen.

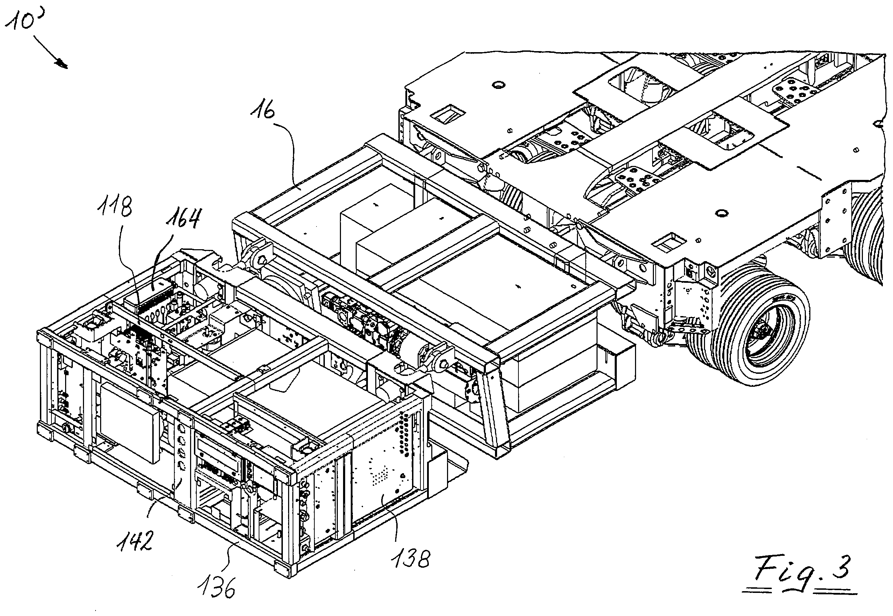

Die Ausführungsform der Figuren 3 und 4B unterscheidet sich von jener der Figuren 1, 2 und 4A lediglich durch den Aufbau der weiteren Funktionseinheit. Und zwar ist anstelle der Funktionseinheit 18, die einen verbrennungsmotorischen Antriebsmodus bereitstellt, eine Funktionseinheit 118 vorgesehen, die einen rein elektromotorischen Antriebsmodus ermöglicht. Daher wird die Ausführungsform der Figuren 3 und 4B im Folgenden nur insoweit beschrieben werden, als sie sich von der Ausführungsform gemäß Figuren 1, 2 und 4A unterscheidet, auf deren Beschreibung hiermit ansonsten ausdrücklich verwiesen sei.

Die weitere Funktionseinheit 118 unterscheidet sich von der weiteren Funktionseinheit 18 insbesondere dadurch, dass sie keinen Dieselmotor 40 und somit auch nicht die mit diesem verbundenen Komponenten aufweist. Die weitere Funktionseinheit 118 kann somit einen verkürzten Rahmen 136 aufweisen, in dem insbesondere ein Hydraulikfluid-Reservoir 138, eine Steuervorrichtung 164 und eine Bedienungseinheit 142 platzoptimiert angeordnet sind.

Nachzutragen ist noch, dass in allen Ausführungsformen die Verbindungselement-Gegenverbindungselement-Kombinationen 20/22 und/oder 24/26 längenveränderbar ausgeführt sein können, so dass die Energieversorgungseinheit 16 und/oder die weitere Funktionseinheit 18 bzw. 118 verschwenkt werden kann bzw. können. Hierdurch können beispielsweise Schrägen angefahren werden, ohne dass die Energieversorgungseinheit 16 und/oder die weitere Funktionseinheit 18 bzw. 118 mit der Schräge kollidiert.

Nachzutragen ist ferner, dass in Figur 4C ein herkömmliches Schwerlastfahrzeug 10" dargestellt ist, nämlich ein Schwerlastfahrzeug, bei dem das Fahrgestell 14 unmittelbar mit der den verbrennungsmotorischen Antriebsmodus bereitstellenden Funktionseinheit 18 verbunden ist.

## Patentansprüche

1. Energieversorgungseinheit (16), die dazu ausgelegt und bestimmt ist, wenigstens einen hydraulischen Antriebsmotor eines Schwerlastfahrzeugs (10; 10') über ein Antriebs-Hydraulikleitungssystem (50) des Schwerlastfahrzeugs (10; 10') mit Hydraulikfluid zu versorgen, umfassend:
- eine von einem zugeordneten Elektromotor (32) antreibbare Hydraulikpumpe (34), welche dazu ausgelegt und bestimmt ist, im Betrieb Hydraulikfluid zu dem Antriebs-Hydraulikleitungssystem (50) des Schwerlastfahrzeugs (10; 10') zu fördern,
**dadurch gekennzeichnet, dass** die Energieversorgungseinheit (16) ferner umfasst:
- einen Rahmen (28), an welchem die Hydraulikpumpe (34) befestigt ist,
mit ersten Verbindungselementen (20), welche dazu ausgelegt und bestimmt sind, mit ersten Gegenverbindungselementen (22) des Schwerlastfahrzeugs (10; 10') zusammenzuwirken, um die Energieversorgungseinheit (16) mit dem Schwerlastfahrzeug (10; 10') betriebsmäßig fest mechanisch zu verbinden, und
mit zweiten Verbindungselementen (24), welche dazu ausgelegt und bestimmt sind, mit zweiten Gegenverbindungselementen (26) einer weiteren Funktionseinheit (18; 118) zusammenzuwirken, um die Energieversorgungseinheit (16) mit einer weiteren Funktionseinheit (18; 118) betriebsmäßig fest mechanisch verbinden zu können und
- einen an dem Rahmen (28) befestigten Batteriepack (30), der dazu ausgelegt und bestimmt ist, den Elektromotor (32) mit elektrischer Antriebsenergie zu versorgen,
wobei die Hydraulikpumpe (34) und der Elektromotor (32) derart ausgelegt sind, dass die Hydraulikpumpe (34) als Hydraulikmotor und der Elektromotor (32) als Elektrogenerator betreibbar sind.

2. Energieversorgungseinheit nach Anspruch 1,
**dadurch gekennzeichnet, dass** die Hydraulikpumpe (34) einen Hydraulikanschluss (35) aufweist, über welchen sie mit einem an der weiteren Funktionseinheit (18; 118) angeordneten Hydraulikfluid-Reservoir (38; 138) in Fluidverbindung bringbar ist.

3. Energieversorgungseinheit nach Anspruch 1 oder 2,
**dadurch gekennzeichnet, dass** sie ferner einen Tank (86) für Kühlflüssigkeit zum Kühlen des Elektromotors (32) umfasst, sowie gewünschtenfalls einen Kühler (88) zum Kühlen der Kühlflüssigkeit zum Kühlen des Elektromotors (32).

4. Energieversorgungseinheit nach einem der Ansprüche 1 bis 3,
**dadurch gekennzeichnet, dass** sie ferner einen Tank (78) für Kühlflüssigkeit zum Kühlen des Batteriepacks (30) umfasst, sowie gewünschtenfalls einen Kühler (80) zum Kühlen der Kühlflüssigkeit zum Kühlen des Batteriepacks (30).

5. Energieversorgungseinheit nach einem der Ansprüche 1 bis 4,
**dadurch gekennzeichnet, dass** sie ferner eine, vorzugsweise ebenfalls von dem Elektromotor (32) antreibbare, zweite Hydraulikpumpe (90) umfasst, welche dazu ausgelegt und bestimmt ist, Hydraulikfluid zu einem Lenkungssystem oder/und einem Hubsystem des Schwerlastfahrzeugs (10; 10') zu fördern.

6. Energieversorgungseinheit nach Anspruch 5,
**dadurch gekennzeichnet, dass** die zweite Hydraulikpumpe (90) einen Hydraulikanschluss aufweist, über welchen sie mit einem an der weiteren Funktionseinheit (18; 118) angeordneten Hydraulikfluid-Reservoir (38, 138) in Fluidverbindung bringbar ist.

7. Energieversorgungseinheit nach einem der Ansprüche 1 bis 6,
**dadurch gekennzeichnet, dass** sie ferner einen Kompressor (102) umfasst, welcher dazu ausgelegt und bestimmt ist, Druckluft für ein Bremssystem des Schwerlastfahrzeugs (10; 10') bereitzustellen.

8. Kombination einer Energieversorgungseinheit nach einem der Ansprüche 1 bis 7 mit einer zumindest ein Hydraulikfluid-Reservoir (38; 138) umfassenden, weiteren Funktionseinheit (18; 118).

9. Kombination nach Anspruch 8,
**dadurch gekennzeichnet, dass** die weitere Funktionseinheit (18; 118) einen Verbrennungsmotor (40), beispielsweise einen Dieselmotor, und eine dritte Hydraulikpumpe (54) umfasst, wobei der Verbrennungsmotor (40) mit der dritten Hydraulikpumpe (54) in diese antreibender Verbindung steht, und wobei die dritte Hydraulikpumpe (54) dazu ausgelegt und bestimmt ist, Hydraulikfluid zu dem Antriebs-Hydraulikleitungssystem (50) des Schwerlastfahrzeugs (10; 10') zu fördern, und zwar gegebenenfalls unter Durchströmen der als Hydraulikmotor arbeitenden einen Hydraulikpumpe (34).

10. Kombination nach Anspruch 9,
**dadurch gekennzeichnet, dass** die Energieversorgungseinheit (16) ein steuerbares Ventil umfasst, welches dann, wenn der Batteriepack (30) vollständig geladen ist, die eine Hydraulikpumpe (34) abschaltet und das von der dritten Hydraulikpumpe (54) geförderte Hydraulikfluid ausschließlich dem Antriebs-Hydraulikleitungssystem (50) des Schwerlastfahrzeugs (10; 10') zuführt.

11. Kombination nach einem der Ansprüche 8 bis 11,
**dadurch gekennzeichnet, dass** die weitere Funktionseinheit (18; 118) eine Steuervorrichtung (64; 164) oder/und eine Benutzerschnittstelle (42; 142) umfasst.

12. Schwerlastfahrzeug (10; 10'), umfassend eine Kombination einer Energieversorgungseinheit (16) mit einer weiteren Funktionseinheit (18; 118) nach einem der Ansprüche 8 bis 11.

13. Schwerlastfahrzeug (10; 10') nach Anspruch 12,
**dadurch gekennzeichnet, dass** der wenigstens eine hydraulische Antriebsmotor ein hydrostatischer Antriebsmotor ist.

14. Schwerlastfahrzeug (10; 10') nach Anspruch 12 oder 13,
**dadurch gekennzeichnet, dass** wenigstens eine die ersten Verbindungselemente (20) der Energieversorgungseinheit (16) mit den ersten Gegenverbindungselementen (22) des Schwerlastfahrzeugs (10; 10') verbindende oder/und die zweiten Verbindungselemente (24) der Energieversorgungseinheit (16) mit den zweiten Gegenverbindungselementen (26) der weiteren Funktionseinheit (18; 118) verbindende Strebe längenveränderbar ausgebildet ist.

15. Schwerlastfahrzeug (10; 10') nach einem der Ansprüche 12 bis 14,
**dadurch gekennzeichnet, dass** eine obere Begrenzungsfläche der Energieversorgungseinheit (16) und gewünschtenfalls auch der weiteren Funktionseinheit (18; 118) höchstens auf gleicher Höhe (H) angeordnet ist wie die Lastaufnahmefläche des Schwerlastfahrzeugs (10; 10').

## Claims

1. Power supply unit (16) which is designed and intended for supplying at least one hydraulic drive motor of a heavy-duty vehicle (10; 10') with hydraulic fluid by means of a drive-hydraulic line system (50) of the heavy-duty vehicle (10; 10'), comprising:
- a hydraulic pump (34) that can be driven by an associated electric motor (32) and is designed and intended for conveying hydraulic fluid to the drive-hydraulic line system (50) of the heavy-duty vehicle (10; 10') during operation,
**characterised in that** the power supply unit (16) further comprises:
- a frame (28) to which the hydraulic pump (34) is fastened,
comprising first connecting elements (20) which are designed and intended for interacting with first mating connecting elements (22) of the heavy-duty vehicle (10; 10') in order to operatively rigidly mechanically connect the power supply unit (16) to the heavy-duty vehicle (10; 10'), and
comprising second connecting elements (24) which are designed and intended for interacting with second mating connecting elements (26) of a further functional unit (18; 118) in order to be able to operatively rigidly mechanically connect the power supply unit (16) to a further functional unit (18; 118), and
- a battery pack (30) which is fastened to the frame (28) and is designed and intended for supplying the electric motor (32) with electrical driving power,
the hydraulic pump (34) and the electric motor (32) being designed such that the hydraulic pump (34) can be operated as a hydraulic motor and the electric motor (32) can be operated as an electric generator.

2. Power supply unit according to claim 1, **characterised in that** the hydraulic pump (34) has a hydraulic connection (35) by means of which it can be brought into fluid connection with a hydraulic fluid reservoir (38; 138) arranged on the further functional unit (18; 118).

3. Power supply according to either claim 1 or claim 2, **characterised in that** it further comprises a tank (86) for cooling liquid for cooling the electric motor (32), and optionally a cooler (88) for cooling the cooling liquid for cooling the electric motor (32).

4. Power supply unit according to any of claims 1 to 3, **characterised in that** it further comprises a tank (78) for cooling liquid for cooling the battery pack (30), and optionally a cooler (80) for cooling the cooling liquid for cooling the battery pack (30).

5. Power supply unit according to any of claims 1 to 4, **characterised in that** it further comprises a second hydraulic pump (90) which can preferably also be driven by the electric motor (32) and which is designed and intended for conveying hydraulic fluid to a steering system and/or a lifting system of the heavy-duty vehicle (10; 10').

6. Power supply unit according to claim 5, **characterised in that** the second hydraulic pump (90) has a hydraulic connection by means of which it can be brought into fluid connection with a hydraulic reservoir (38, 138) arranged on the further functional unit (18; 118).

7. Power supply unit according to any of claims 1 to 6, **characterised in that** it further comprises a compressor (102) which is designed and intended for providing compressed air for a braking system of the heavy-duty vehicle (10; 10').

8. Combination of a power supply unit according to any of claims 1 to 7 and a further functional unit (18; 118) that comprises at least one hydraulic fluid reservoir (38; 138).

9. Combination according to claim 8, **characterised in that** the further functional unit (18; 118) comprises an internal combustion engine (40), for example a diesel engine, and a third hydraulic pump (54), the internal combustion engine (40) being in driving connection with the third hydraulic pump (54), the third hydraulic pump (54) being designed and intended for conveying hydraulic fluid to the drive-hydraulic line system (50) of the heavy-duty vehicle (10; 10'), in particular optionally with said fluid flowing through the one hydraulic pump (34) operating as a hydraulic motor.

10. Combination according to 9, **characterised in that** the power supply unit (16) comprises a controllable valve which, when the battery pack (30) is fully charged, switches off the one hydraulic pump (34) and feeds the hydraulic fluid conveyed by the third hydraulic pump (54) exclusively to the drive-hydraulic line system (50) of the heavy-duty vehicle (10; 10').

11. Combination according to any of claims 8 to 11, **characterised in that** the further functional unit (18; 118) comprises a controller (64; 164) and/or a user interface (42; 142).

12. Heavy-duty vehicle (10; 10') comprising a combination of a power supply unit (16) and a further functional unit (18; 118) according to any of claims 8 to 11.

13. Heavy-duty vehicle (10; 10') according to claim 12, **characterised in that** the at least one hydraulic drive motor is a hydrostatic drive motor.

14. Heavy-duty vehicle (10; 10') according to either claim 12 or claim 13, **characterised in that** at least one strut that connects the first connecting elements (20) of the power supply unit (16) to the first mating connecting elements (22) of the heavy-duty vehicle (10; 10'), and/or which connects the second connecting elements (24) of the power supply unit (16) to the second mating connecting elements (26) of the further functional unit (18; 118), is longitudinally adjustable.

15. Heavy-duty vehicle (10; 10') according to any of claims 12 to 14, **characterised in that** an upper delimiting surface of the power supply unit (16) and optionally also the further functional unit (18; 118) are arranged no higher than the same height (H) as the load-receiving surface of the heavy-duty vehicle (10; 10').

## Revendications

1. Unité d'alimentation en énergie (16), qui est configurée pour et destinée à alimenter en fluide hydraulique au moins un moteur d'entraînement hydraulique d'un poids lourd (10 ; 10') par l'intermédiaire d'un système de conduit hydraulique d'entraînement (50) du poids lourd (10 ; 10'), comprenant :
- une pompe hydraulique (34), pouvant être entraînée par un moteur électrique (32) associé, laquelle est configurée pour et destinée à, lors du fonctionnement, refouler du fluide hydraulique vers le système de conduit hydraulique d'entraînement (50) du poids lourd (10, 10'),
**caractérisée en ce que** l'unité d'alimentation en énergie (16) comprend en outre :
- un cadre (28), au niveau duquel la pompe électrique (34) est fixée,
- avec des premiers éléments de liaison (20), lesquels sont configurés pour et destinés à coopérer avec des premiers contre-éléments de liaison (22) du poids lourd (10 ; 10') pour relier mécaniquement de manière solidaire l'unité d'alimentation en énergie (16) au poids lourd (10 ; 10') conformément au fonctionnement, et
- avec des seconds éléments de liaison (24), lesquels sont configurés pour et destinés à coopérer avec des seconds contre-éléments de liaison (26) d'une autre unité fonctionnelle (18; 118) pour pouvoir relier mécaniquement de manière solidaire l'unité d'alimentation en énergie (16) à une autre unité fonctionnelle (18; 118) conformément au fonctionnement, et
- un bloc-batterie (30) fixé au niveau du cadre (28), qui est configuré pour et destiné à alimenter le moteur électrique (32) en énergie d'entraînement électrique,
dans laquelle la pompe hydraulique (34) et le moteur électrique (32) sont configurés de telle manière que la pompe hydraulique (34) peut fonctionner en tant que moteur hydraulique et le moteur électrique (32) peut fonctionner en tant que générateur électrique.

2. Unité d'alimentation en énergie selon la revendication 1,
**caractérisée en ce que** la pompe hydraulique (34) présente un raccord hydraulique (35), par l'intermédiaire duquel elle peut être amenée en communication fluidique avec un réservoir de fluide hydraulique (38 ; 138) disposé au niveau de l'autre unité fonctionnelle (18 ; 118).

3. Unité d'alimentation en énergie selon la revendication 1 ou 2,
**caractérisée en ce qu'**elle comprend en outre un réservoir (86) pour du liquide de refroidissement servant à refroidir le moteur électrique (32), ainsi que, de manière facultative, un système refroidisseur (88) servant à refroidir le liquide de refroidissement pour refroidir le moteur électrique (32).

4. Unité d'alimentation en énergie selon l'une quelconque des revendications 1 à 3,
**caractérisée en ce qu'**elle comprend en outre un réservoir (78) pour du liquide de refroidissement servant à refroidir le bloc-batterie (30), ainsi que, de manière facultative, un système refroidisseur (80) servant à refroidir le liquide de refroidissement pour refroidir le bloc-batterie (30).

5. Unité d'alimentation en énergie selon l'une quelconque des revendications 1 à 4,
**caractérisée en ce qu'**elle comprend en outre une deuxième pompe hydraulique (90), pouvant être entraînée de préférence également par le moteur électrique (32), laquelle est configurée pour et destinée à refouler du fluide hydraulique vers un système de direction et/ou un système de levage du poids lourd (10 ; 10').

6. Unité d'alimentation en énergie selon la revendication 5,
**caractérisée en ce que** la deuxième pompe hydraulique (90) présente un raccord hydraulique, par l'intermédiaire duquel elle peut être amenée en communication fluidique avec un réservoir de fluide hydraulique (38, 138) disposé au niveau de l'autre unité fonctionnelle (18 ; 118).

7. Unité d'alimentation en énergie selon l'une quelconque des revendications 1 à 6,
**caractérisée en ce qu'**elle comprend en outre un compresseur (102), lequel est configuré pour et destiné à fournir de l'air comprimé pour un système de freinage du poids lourd (10 ; 10').

8. Combinaison d'une unité d'alimentation en énergie selon l'une quelconque des revendications 1 à 7 et d'une autre unité fonctionnelle (18 ; 118) comprenant au moins un réservoir de fluide hydraulique (38 ; 138).

9. Combinaison selon la revendication 8,
**caractérisée en ce que** l'autre unité fonctionnelle (18 ; 118) comprend un moteur à combustion interne (40), par exemple un moteur diesel, et une troisième pompe hydraulique (54), dans laquelle le moteur à combustion interne (40) est en liaison par entraînement de la troisième pompe hydraulique (54) avec celle-ci,
et dans laquelle la troisième pompe hydraulique (54) est configurée pour et destinée à refouler du fluide hydraulique vers le système de conduit hydraulique d'entraînement (50) du poids lourd (10 ; 10'), et ce éventuellement en traversant une pompe hydraulique (34) fonctionnant en tant que moteur hydraulique.

10. Combinaison selon la revendication 9,
**caractérisée en ce que** l'unité d'alimentation en énergie (16) comprend une soupape pouvant être commandée, laquelle met hors service une pompe hydraulique (34) quand le bloc-batterie (30) est totalement chargé, et amène le fluide hydraulique refoulé par la troisième pompe hydraulique (54) exclusivement au système de conduit hydraulique d'entraînement (50) du poids lourd (10 ; 10').

11. Combinaison selon l'une quelconque des revendications 8 à 11,
**caractérisée en ce que** l'autre unité fonctionnelle (18 ; 118) comprend un dispositif de commande (64 ; 164) et/ou une interface utilisateur (42 ; 142).

12. Poids lourd (10 ; 10') comprenant une combinaison d'une unité d'alimentation en énergie (16) et d'une autre unité fonctionnelle (18 ; 118) selon l'une quelconque des revendications 8 à 11.

13. Poids lourd (10 ; 10') selon la revendication 12,
**caractérisé en ce que** l'au moins un moteur d'entraînement hydraulique est un moteur d'entraînement hydrostatique.

14. Poids lourd (10 ; 10') selon la revendication 12 ou 13,
**caractérisé en ce qu'**au moins une entretoise reliant les premiers éléments de liaison (20) de l'unité d'alimentation en énergie (16) aux premiers contre-éléments de liaison (22) du poids lourd (10 ; 10') et/ou reliant les seconds éléments de liaison (24) de l'unité d'alimentation en énergie (16) aux seconds contre-éléments de liaison (26) de l'autre unité fonctionnelle (18 ; 118) est réalisée avec une longueur variable.

15. Poids lourd (10 ; 10') selon l'une quelconque des revendications 12 à 14,
**caractérisé en ce qu'**une surface de délimitation supérieure de l'unité d'alimentation en énergie (16) et, de manière facultative, également de l'autre unité fonctionnelle (18 ; 118), est disposée au maximum à une hauteur (H) identique à celle de la surface de réception de charge du poids lourd (10 ; 10').
